# EUROPÄISCHE PATENTSCHRIFT

(11) **EP 2 044 339 B1**
(45) Veröffentlichungstag und Bekanntmachung des Hinweises auf die Patenterteilung: **25.11.2009**
(21) Anmeldenummer: 07765245.1
(22) Anmeldetag: 23.07.2007
(51) Int. Cl.: F16B 25/10

(54) **Loch- und Gewindeformende Schraube**
Hole-forming and thread-forming screw
Vis destinée à former des trous et des filets

(30) Priorität: 26.07.2006 DE 102006034584
(43) Veröffentlichungstag der Anmeldung: 08.04.2009
(73) Patentinhaber: EJOT GmbH & Co. KG, 57334 Bad Laasphe (DE)
(72) Erfinder: FRIEDERICH, Heinrich, 63674 Altenstadt (DE); ACHENBACH, Michael, 35236 Breidenbach (DE); CHRIST, Eberhard, 99897 Tambach-Dietharz (DE)
(74) Vertreter: Bardehle, Heinz
(86) Internationale Anmeldenummer: PCT/EP2007/006534
(87) Internationale Veröffentlichungsnummer: WO 2008/012050

(56) Entgegenhaltungen:
- EP-A1- 0 824 198
- DE-A1- 3 922 684
- DE-C1- 4 440 437
- US-A- 5 947 670

## Beschreibung

Die Erfindung bezieht sich auf eine loch- und gewindeformende Schraube mit einem eine Werkzeugaufnahme aufweisenden Kopf, einem Gewindeschaft und einem sich kegelähnlich verjüngenden Lochformteil, wobei längs des Lochformteils gewindeartig verlaufende Rippen vorgesehen sind.

Eine derartige Schraube ist aus der DE 196 32 838 A1 bekannt. Bei dieser Schraube sind längs eines sich kegelähnlich bis in eine Spitze verjüngenden Lochformteils gewindeartig verlaufende, als Schneidkanten ausgebildete Rippen vorgesehen, deren Steigungsrichtung derjenige des eigentlichen Gewindes der Schraube entspricht. Aufgrund dieser Gestaltung wird beim Eindrehen der Schraube in ein Blechstück durch die Schneidkante ein Loch in dem Blechstück ausgefräst, bis schließlich das Gewinde der Schraube das ausgefräste Loch erreicht und das Gewinde in das Blechstück furcht.

Es ist weiterhin aus der EP 0 464 071 eine Schraube bekannt, die dazu dient, ohne Spanbildung mit ihrem Lochformteil ein Loch in ein Blechstück einzubringen, wobei die Verformung des Blechs durch Drehung der Schraube und damit durch Erzeugung von Reibungswärme vor sich geht. Bei dieser bekannten Schraube wird ein sich kegelähnlich verjüngendes Lochformteil verwendet, das mit einem stumpfen, als Lochreibteil wirkenden Endstück auf das betreffende Blechstück aufgesetzt wird, das aufgrund von schneller Rotation der Schraube so weit erwärmt wird, dass das Material des Blechstücks vor dem stumpfen Endstück wegfließt und dabei ein Loch mit einem düsenähnlichen Durchzug bildet, der sich auf beiden Seiten des Blechstücks axial erstreckt.

Es ist weiterhin aus der DE 195 25 732 eine gewindeformende Schraube bekannt, die einen Gewindeschaft und ein sich verjüngendes konisches Lochformteil mit axialen Fräsrippen besitzt, die den Einschraubvorgang zu Beginn des Einschraubens einer Schraube, insbesondere in eine Span- oder Holzplatte, erleichtern sollen. Die Fräsrippen haben eine an ihrer Außenseite verlaufende Fräskante, die gemäß ihrer Bezeichnung dazu dient, Material aus dem Holz- oder der Spanplatte herauszufräsen, ohne dass dabei Axialkräfte zur Wirkung kommen können, die die Schraube in das Holz- bzw. die Spanplatte hineindrücken. Bei den Fräsrippen handelt es sich also lediglich um das Ausformen eines Loches zur späteren Aufnahme der Schraube, also um eine Wirkung, die auf das Zerspanen des Holzes bzw. der Spanplatte hinausläuft.

Der Erfindung liegt die Aufgabe zugrunde, die eingangs erwähnte Schraube so zu gestalten, dass beim Eindrehen des Lochformteils in das Blechstück dessen Material nicht zerspant, sondern nur weggedrückt wird, um es für die Ausbildung eines Durchzugs auf nur einer Seite des Blechstücks zu erhalten, wobei die Lage des Durchzugs im Wesentlichen auf die der Schraube zugewandte Seite oder von der Schraube abgewandte Seite wählbar sein soll.

Erfindungsgemäß geschieht dies dadurch, dass das Lochformteil in einem stumpf abgerundeten Endstück endet und die das Material des Blechstücks nur verdrängenden, abgerundeten Rippen symmetrisch gegenüberliegend angeordnet sind und eine Steigung aufweisen, die ein Vielfaches der Steigung des Gewindes beträgt.

Aufgrund der sich besonders steil verlaufenden Rippen längs des Lochformteils ergibt sich die Tendenz, dass sich das Material des Bleches vor den Rippen staut und damit aufgrund des auf die Schraube bei ihrem Eindrehen wirkenden Druckes das Entstehen des Durchzugs begünstigt. Die Folge davon ist eine besonders ausgeprägte Ausbildung des Durchzugs auf der einen Seite des Blechs. Die längs des Lochformteils gewindeartig verlaufenden Rippen haben also keinerlei Zerspanungswirkung, was insbesondere beim entsprechenden Verarbeiten von Blechen besonders erwünscht ist, da beim Einsatz von Blechen in einem Fabrikationsprozess eine Spanbildung meist unbedingt zu vermeiden ist.

Die Rippen kann man so gestalten, dass sie sich über die Länge des Lochformteils oder nur teilweise über dessen Länge erstrecken. Im letzteren Falle bringt man vorteilhaft die Rippen im Wesentlichen über den Anfangsbereich des Lochformteils an, womit der Teil gemeint ist, der unmittelbar dem stumpfen Endstück folgt. Es ist aber natürlich auch möglich, die Rippen im Wesentlichen über den Endbereich des Lochformteils zu erstrecken. Dies hängt von dem Material des Blechteils ab, das je nach der Erfahrung mit seiner Verarbeitung entweder Rippen im Anfangsbereich oder Endbereich des Lochformteils als vorteilhaft erkennen lässt. Weiterhin ist es möglich, die Steigungsrichtung der Rippen in Bezug auf die Steigungsrichtung des Gewindes des Gewindeschaftes zu wählen. Man kann also entweder die Steigungsrichtung so legen, dass diese der Steigungsrichtung des Gewindes des Gewindeschaftes entspricht, was einen Durchzug auf der der Schraube zugewandten Seite des Blechs begünstigt. Es ist aber auch möglich, die Rippen hinsichtlich ihrer Steigungsrichtung so anzuordnen, dass sie der Steigungsrichtung des Gewindes des Gewindeschaftes entgegengesetzt gerichtet sind, was die Ausbildung des Durchzugs auf der der Schraube abgewandten Seite des Blechs fördert.

Dabei kann man je nach gewünschter Wirkung auf das Blech und die Bildung des Durchzuges die Zahl der Rippen im vorderen Bereich des Lochformteils unterschiedlich von der Zahl der Rippen im hinteren Bereich vorsehen. Wenn insbesondere die Zahl der Rippen im vorderen Bereich des Lochformteils größer ist als im hinteren Bereich, so hat dies die Wirkung, dass die Rippen einen besonders starken Zug auf die einzudrehende Schraube ausüben, wenn diese bereits ihr Loch mit dem stumpfen Endstück geformt hat.

Für die Ausbildung der Rippen eignet sich insbesondere deren Herausdrücken aus dem Material des Lochformteils. Dies lässt sich dadurch herbeiführen, dass die Rippen jeweils neben mindestens einer in das Lochformteil eingedrückten Rille aus diesem herausgedrückt sind.

Eine besonders günstige Formgebung des Lochformteils im Bereich seines Endstücks besteht darin, dass das Endstück eine koaxiale Vertiefung aufweist, die von einem stumpfen Rand umgeben ist, dessen Außdendurchmesser um das 0,35 bis 0,7-fache kleiner ist als der größte Durchmesser des Lochformteils. In diesem Falle ergibt sich beim Andrücken der Schraube an ein Blechteil ein gegenüber der punktweisen Berührung mit einem stumpf abgerundeten Endstück eine Berührungsfläche und damit eine entsprechend große Erwärmung, was sehr schnell zu der Verformung des Material des Bleches und damit dem Eindringen der Schraube in das Blechteil führt, womit dann auch die Bildung des Durchzugs einher geht.

Als Vertiefung im Endstück des Lochformteils genügt eine Länge von weniger als 3 mm, was auf jeden Fall ausreichend ist, um auch Material beim Weichwerden des Blechteils aufzunehmen.

Es sei jedoch darauf hingewiesen, dass natürlich das Lochformteil auch als stumpf abgerundetes Endstück ausgebildet werden kann, was besonders dann bedeutsam ist, wenn das Blechteil aus einem relativ weichen Material, wie z.B. Aluminium, besteht.

In den Figuren sind Ausführungsbeispiele der Erfindung dargestellt. Es zeigen:
- Figur 1: Die Schraube mit mehreren sich über die ganze Länge des Lochformteils erstreckenden Rippen, deren Steigungsrichtung derjenigen des Gewindeschaftes entgegengesetzt gerichtet ist;
- Figur 2: Ein Schnitt längs der Linie II-II aus Figur 1;
- Figur 3: Ein Lochformteil mit sich nur über den Anfangsbereich des Lochformteils erstreckenden Rippen;
- Figur 4: Ein Lochformteil mit sich im Wesentlichen über den Endbereich des Lochformteils erstreckenden Rippen;
- Figur 5: Ein Lochformteil mit sich über dessen gesamte Länge erstreckenden Rippen, deren Steigungsrichtung derjenigen des Gewindeschaftes entspricht;
- Figur 6: Ein Lochformteil mit sich gänzlich oder nur teilweise über dieses erstreckenden Rippen, wobei die kurzen Rippen im Anfangsbereich des Lochformteils liegen;
- Figur 7: Ein Lochformteil, ebenfalls mit sich gänzlich oder nur teilweise über dieses erstreckenden Rippen, wobei die kurzen Rippen sich über den Endbereich des Lochformteils erstrecken;
- Figur 8: Ein Lochformteil mit einem stumpf abgerundeten Endstück und Rippen, die aus einer Rille herausgedrückt sind;
- Figur 9: Einen Schnitt längs der Linie IX-IX aus Figur 8;
- Figur 10: Einen ähnlichen Schnitt mit Rippen, die durch zwei seitliche Rillen herausgedrückt sind;
- Figur 11: Einen ähnlichen Schnitt durch ein Lochformteil, bei dem die Rippen nur durch eine Rippe an einer Seite herausgedrückt sind;
- Figur 12: Ein Lochformteil mit koaxialer Vertiefung in seinem Endstück;
- Figur 13: Einen Schnitt längs der Linie XIII-XIII aus Figur 12;
- Figur 14a, b und c: Das Lochformteil gemäß der Schraube nach Figur 1 in verschiedenen Phasen des Eindringens und Durchdringens durch ein Blechstück.

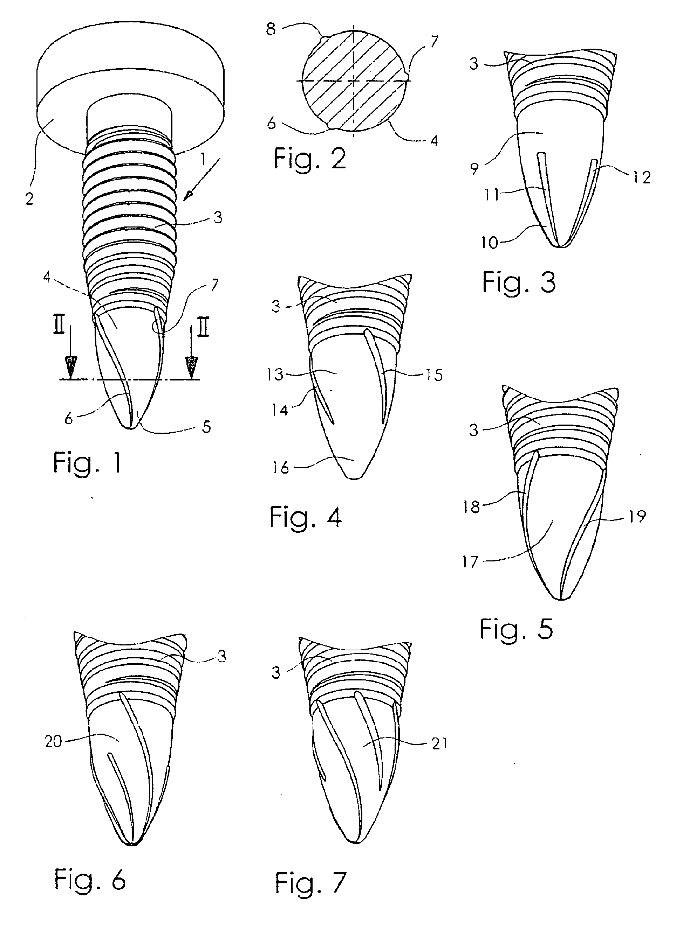

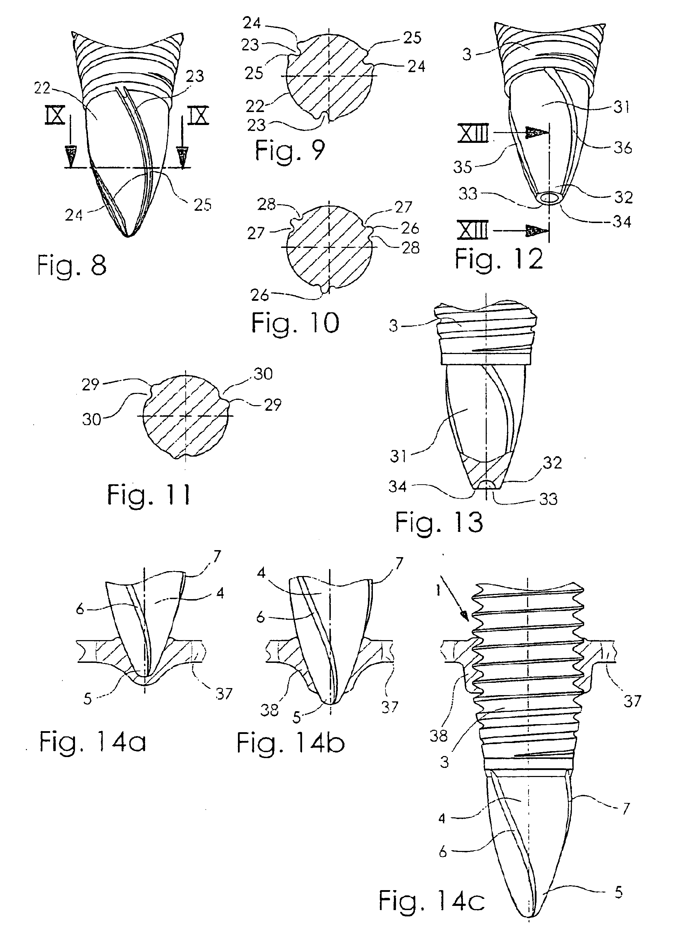

In Figur 1 ist die erfindungsgemäße loch- und gewindeformende Schraube 1 in perspektivischer Sicht dargestellt. Die Schraube weist den Schraubenkopf 2, den Gewindeschaft 3 und das Lochformteil 4 auf, das zum Eindrehen in ein Blechstück dient (siehe Figur 14a bis c). Der Schraubenkopf 2 ist mit irgendeiner bekannten Aufnahme für einen Antrieb versehen. Das vor dem Gewindeschaft 3 angeordnete Lochformteil 4 ist kegelähnlich gebildet und verjüngt sich zum Endstück 5 hin, das zum Eindrehen in ein Werkstück, insbesondere ein Blechstück, auf dieses aufgesetzt und in Drehung versetzt wird. Das Endstück 5 in Figur 1 ist stumpf abgerundet ausgebildet. Beim Aufsetzen auf ein Werkstück sorgt die Rundung des Endstücks 5 dafür, dass sich das Blechstück so schnell erhitzen kann, dass das Material des Blechstücks fließt und das Eindringen des Lochformteils 4 in das Blechstück ermöglicht (siehe hierzu Figur 14a bis c).

Die in der Figur 1 dargestellte Schraube 1 ist im Bereich ihres Lochformteils 4 mit den Rippen 6 und 7 versehen, die, wie die Schnittzeichnung gemäß Figur 2 zeigt, symmetrisch zur Achse der Schraube angeordnet sind. Gemäß Figur 2 handelt es sich dabei um drei symmetrisch angeordneten Rippen 6, 7 und 8. Beim Eindrehen der Schraube 1 in ein Blechteil drängen die Rippen 6, 7 und 8 das durch die Erwärmung erweichte Material des Blechteils weg und bilden damit einen Durchzug aus (siehe Figuren 14b und c), dessen Richtung von der Steigung der Rippen 6, 7 und 8 beeinflusst wird. Bei der Schraube gemäß Figur 1 verläuft die Steigung der Rippen 6, 7 und 8 entgegengesetzt zur Steigungsrichtung des Gewindes des Gewindeschaftes 3. Die Rippen drücken damit Material aus dem Blechteil vor sich her und lassen einen Durchzug entstehen, der im Wesentlichen auf derjenigen Seite des Blechteils liegt, die der Einschraubrichtung entgegengesetzt ist (siehe Figur 14c). Die Rippen 6, 7 und 8 üben dabei ausschließlich eine Material verformende Wirkung aus, sie tragen also kein Material des Blechstücls im Sinne eines Abschabens oder dergleichen ab, so dass das aus dem Blechteil ausgeformte Material voll in den Durchzug überführt wird.

In der Figur 3 ist eine Schraube mit einem Lochformteil 9 dargestellt, die in ihrem dem Endstück 10 zugewandten Bereich mit verkürzten Rippen 11 und 12 versehen ist. Im Falle eines Materials des Blechteils, das nicht besonders hart ist, lassen sich diese verkürzten Rippen 11 und 12 besonders vorteilhaft anwenden.

In der Figur 4 ist eine weitere Abwandlung der Gestaltung gemäß Figur 1 dargestellt, bei der die Rippen ebenfalls verkürzt sind, sich hier aber über den Endbereich des Lochformteils erstrecken. Die Rippen 14 und 15 reichen vom Anfang des Gewindes des Gewindeschaftes 3 bis etwa in die Mitte des Lochformteils 13. Aufgrund dieser Gestaltung ergibt sich beim Aufdrücken der Schraube gemäß Figur 1 auf ein Blechteil zunächst die Reibung und Erwärmung der Kontaktstelle zwischen Blechteil und Schraube, aufgrund deren sich das Endstück 16 in das Material des Blechstücks eindrückt, bis die Rippen 14 und 15 zusätzlich Material aus dem Blechstück verdrängen und dabei in erwünschter Weise den Durchzug ausbilden.

In der Figur 5 ist eine Gestaltung der Schraube ähnlich derjenigen gemäß Figur 1 dargestellt, bei der allerdings die Steigung der sich über das gesamte Lochformteil 17 erstreckenden Rippen 18 und 19 entgegengesetzt zur Steigungsrichtung des Gewindes des Gewindeschaftes 3 ist. Die Folge davon ist, dass sich beim Aufsetzen der Schraube gemäß Figur 5 auf ein Blechstück ein Durchzug ausbildet, der ausgeprägt auf der Seite des Blechstücks liegt, auf die die Schraube aufgesetzt ist.

In den Figuren 6 und 7 sind zwei Abwandlungen der Schrauben gemäß den vorstehend behandelten Ausführungsbeispielen dargestellt, bei denen es sich um eine Mischform der Länge der Rippen handelt. Gemäß Figur 6 sind nämlich lange und kurze Rippen vorgesehen, wobei die kurzen Rippen im Anfangsbereich des Lochformteils 20 liegen, wogegen bei der Gestaltung gemäß Figur 7 die kurzen Rippen im Endbereich des Lochformteils 21 angeordnet sind. Die Anwendung der vorstehend beschriebenen besonderen Gestaltungen der Schraube hängt von den jeweiligen Materialeigenschaften des zugrunde liegenden Blechteils ab.

In den Figuren 8 bis 11 ist eine Gestaltung des Lochformteils mit Rippen dargestellt, bei der es sich um eine besonders vorteilhafte Erzeugung der Rippen handelt.

Das Lochformteil 22 gemäß Figur 8, das prinzipiell der Gestaltung der Schraube gemäß Figur 1 entspricht, zeigt jeweils zwei dicht nebeneinander verlaufende Rippen, die dadurch erzeugt sind, dass in das Lochformteil 22 eine entsprechend verlaufende Rille 23 eingedrückt ist, die aufgrund von Materialverdrängung dafür sorgt, dass sich seitlich der Rille 23 die beiden parallel verlaufenden Rippen 24 und 25 ausbilden. Diese Gestaltung ist auch in der Schnittzeichnung gemäß Figur 9 dargestellt, die einen Schnitt längs der Linie IX-IX aus Figur 8 zeigt.

Die Ausbildung derartiger Rippen kann auch anders vor sich gehen, wie dies die Figuren 10 und 11 verdeutlichen. Gemäß Figur 10, die einen Schnitt ähnlich demjenigen gemäß Figur 9 zeigt, handelt es sich um jeweils eine Rippe 26, die durch seitlich neben ihr eingedrückte Rillen 27 und 28 entstanden ist.

Eine Variante hierzu zeigt die Figur 11, gemäß der eine Rippe 29 im Wesentlichen durch Eindrücken einer seitlich neben ihr verlaufenden einseitigen Rille 30 entstanden ist.

In den Figuren 12 und 13 ist eine Gestaltung des Lochformteils 31 dargestellt, das in seinem Endstück 32 mit einer koaxialen Vertiefung 33 versehen ist, die von einem stumpfen Rand 34 umgeben ist, der dafür sorgt, dass beim Aufsetzen des Lochformteils 31 auf ein Blechstück sofort ein relativ großer flächiger Bereich für die Erzeugung von Reibungswärme zur Verfügung steht. Diese Gestaltung verbessert das anfängliche Eindringen des Lochformteils 31 in ein Blechstück, bis die Rippen 35 und 36 greifen und für eine entsprechende Verformung des Blechmaterials sorgen, wie dies im Zusammenhang mit den vorher behandelten Ausführungsbeispielen beschrieben ist. Dabei zeigt die Figur 13 einen Schnitt längs der Linie XIII-XIII aus Figur 12.

In den Figur 14a bis c ist das Eindrehen einer Schraube in ein Blechstück und das Ausformen eines Durchzuges dargestellt, wobei die in Figur 1 dargestellte Gestaltung einer Schraube zugrunde gelegt ist. Gemäß Figur 14a ist das stumpfe Endstück 5 des Lochformteils 4 in das Blechstück 37 teilweise eingedrungen. Gemäß Figur 14b hat das Lochformteil 4 das Blechstück 37 vollständig durchbohrt, so dass nunmehr die Rippen 6 und 7 ihre Wirkung auf das Material des Blechstücks 37 ausüben und dieses zu einem Durchzug 38 ausformen. In der Figur 14c ist dann das Endstadium des Eindringens der Schraube dargestellt, bei der diese mit ihrem Gewindeschaft 3 das Blechstück 37 vollständig durchdrungen und dabei den Durchzug 38 ausgeformt hat, der sich im Wesentlichen in Richtung des Eindringens der Schraube in das Blechstück 37 erstreckt.

## Patentansprüche

1. Loch- und gewindeformende Schraube (1) zum Eindrehen in ein Blechstück mit einem eine Werkzeugaufnahme aufweisenden Kopf (2), einem Gewindeschaft (3) und einem sich kegelähnlich verjüngenden Lochformteil (4, 9, 13, 17, 20, 21, 22, 31), wobei längs des Lochformteils gewindeartig verlaufende Rippen vorgesehen sind, **dadurch gekennzeichnet, dass** das Lochformteil in einem stumpf abgerundeten Endstück endet und die das Material des Blechstücks nur verdrängenden, abgerundeten Rippen symmetrisch gegenüberliegend angeordnet sind und eine Steigung aufweisen, die ein Vielfaches der Steigung des Gewindes beträgt.

2. Schraube nach Anspruch 1, **dadurch gekennzeichnet, dass** sich die Rippen (6, 7, 8) über die Länge des Lochformteils (4) erstrecken.

3. Schraube nach Anspruch 1, **dadurch gekennzeichnet, dass** sich die Rippen (11, 12; 14, 15) teilweise über die Länge des Lochformteils (9, 13) erstrecken.

4. Schraube nach Anspruch 3, **dadurch gekennzeichnet, dass** sich die Rippen (11, 12) im Wesentlichen über den Anfangsbereich des Lochformteils (9) erstrecken.

5. Schraube nach Anspruch 3, **dadurch gekennzeichnet, dass** sich die Rippen (14, 15) im Wesentlichen über den Endbereich des Lochformteils (13) erstrecken.

6. Schraube nach einem der Ansprüche 1 bis 5, **dadurch gekennzeichnet, dass** die Rippen (6, 7, 8) mit einer Steigungsrichtung verlaufen, die der Steigungsrichtung des Gewindes des Gewindeschaftes (3) entspricht.

7. Schraube nach einem der Ansprüche 1 bis 5, **dadurch gekennzeichnet, dass** die Rippen (18, 19) mit einer Steigungsrichtung verlaufen, die der Steigungsrichtung des Gewindes des Gewindeschaftes (3) entgegengesetzt gerichtet ist.

8. Schraube nach einem der Ansprüche 3 bis 7, **dadurch gekennzeichnet, dass** die Zahl der Rippen im vorderen Teil des Lochformteils (20, 21) unterschiedlich von der Zahl der Rippen im hinteren Bereich ist.

9. Schraube nach einem der Ansprüche 1 bis 8, **dadurch gekennzeichnet, dass** die Rippen (24, 25; 26; 29) jeweils neben mindestens einer in das Lochformteil (22) eingedrückten Rille (23; 27, 28; 30) aus diesem herausgedrückt sind.

10. Schraube nach einem der Ansprüche 1 bis 9, **dadurch gekennzeichnet, dass** das Lochformteil (31) ein Endstück (32) mit einer koaxialen Vertiefung (33) aufweist, die von einem stumpfen Rand 34 umgeben ist, dessen Außendurchmesser um das 0,35 bis 0,7-fache kleiner ist als der größte Durchmesser des Lochformteils 31.

11. Schraube nach Anspruch 10, **dadurch gekennzeichnet, dass** die Vertiefung (33) kürzer als 3 mm ist.

12. Schraube nach einem der Ansprüche 1 bis 11, **dadurch gekennzeichnet, dass** das Lochformteil (4, 9) ein stumpf abgerundetes Endstück (5, 10) aufweist.

## Claims

1. Hole-forming and thread-forming screw (1) for screwing into a metal plate, with a head (2) having a tool receptacle, with a threaded shank (3), and with a hole-forming part (4, 9, 13, 17, 20, 21, 22, 31) tapering in the manner of a cone, wherein ridges are provided that extend along the hole-forming part in the manner of a thread, **characterized in that** the hole-forming part terminates in a bluntly rounded end piece, and the rounded ridges, which merely displace the material of the metal plate, are arranged in symmetrical opposition and have a pitch that is equal to a multiple of the pitch of the thread.

2. Screw according to claim 1, **characterized in that** the ridges (6, 7, 8) extend over the length of the hole-forming part (4).

3. Screw according to claim 1, **characterized in that** the ridges (11, 12; 14, 15) extend over part of the length of the hole-forming part (9, 13).

4. Screw according to claim 3, **characterized in that** the ridges (11, 12) extend essentially over the initial region of the hole-forming part (9).

5. Screw according to claim 3, **characterized in that** the ridges (14, 15) extend essentially over the final region of the hole-forming part (13).

6. Screw according to any one of claims 1 through 5, **characterized in that** the ridges (6, 7, 8) run in a pitch direction that corresponds to the pitch direction of the thread of the threaded shank (3).

7. Screw according to any one of claims 1 through 5, **characterized in that** the ridges (18, 19) run in a pitch direction that is opposite to the pitch direction of the thread of the threaded shank (3).

8. Screw according to any one of claims 3 through 7, **characterized in that** the number of ridges in the front portion of the hole-forming part (20,21) is different from the number of ridges in the rear region.

9. Screw according to any one of claims 1 through 8, **characterized in that** each of the ridges (24, 25; 26; 29) is pressed out of at least one adjacent groove (23; 27, 28; 30) that is pressed into the hole-forming part (22).

10. Screw according to any one of claims 1 through 9, **characterized in that** the hole-forming part (31) has an end piece (32) with a coaxial recess (33) that is surrounded by a blunt rim (34) whose outer diameter is smaller than the largest diameter of the hole-forming part (31) by a factor of 0.35 to 0.7.

11. Screw according to claim 10, **characterized in that** the recess (33) is shorter than 3 mm.

12. Screw according to any one of claims 1 through 11, **characterized in that** the hole-forming part (4, 9) has a bluntly rounded end piece (5,10).

## Revendications

1. Vis perceuse et taraudante (1) destinée à être vissée dans une tôle, comportant une tête (2) avec un raccord pour la fixation de l'outil, une tige filetée (3) et une partie taraudante (4,9,13,17,20,21,22,31) de forme conique allant en s'amincissant, des nervures filetées courant le long de cette partie taraudante, **caractérisée en ce que** la partie taraudante se termine par une extrémité mousse arrondie et que les nervures arrondies ne faisant que repousser le matériau de la tôle sont disposées de façon opposée symétrique et présentent un pas qui est un multiple du pas du filetage.

2. Vis selon la revendication 1, **caractérisée en ce que** les nervures (6,7,8) s'étendent sur la longueur de la partie taraudante (4).

3. Vis selon la revendication 1, **caractérisée en ce que** les nervures (11,12 ;14,15)) s'étendent partiellement sur la longueur de la partie taraudante (9,13).

4. Vis selon la revendication 3, **caractérisée en ce que** les nervures (11,12) s'étendent essentiellement sur la portion du début de la partie taraudante (9).

5. Vis selon la revendication 3, **caractérisée en ce que** les nervures (14,15) s'étendent essentiellement sur la portion finale de la partie taraudante (13).

6. Vis selon une des revendications 1 à 5, **caractérisée en ce que** les nervures (6,7,8) s'étendent selon une orientation du pas correspondant à l'orientation du pas de la tige filetée (3).

7. Vis selon une des revendications 1 à 5, **caractérisée en ce que** les nervures (18,19) s'étendent selon une orientation du pas opposée à l'orientation du pas du filetage de la tige filetée (3).

8. Vis selon une des revendications 3 à 7, **caractérisée en ce que** le nombre des nervures dans la partie antérieure de la partie taraudante(20,21) est différent du nombre des nervures dans la partie postérieure.

9. Vis selon une des revendications 1 à 8, **caractérisée en ce que** les nervures (24,25 ; 26 ; 29) bordant respectivement une rainure (23 ;27 ,28 ;30) creusée dans la partie taraudante (22) sont repoussées à partir de cette-dernière.

10. Vis selon une des revendications 1 à 9, **caractérisée en ce que** la partie taraudante (31) présente une extrémité (32) avec un creux coaxial (33) qui est entouré d'un bord mousse (34) dont le diamètre extérieur est plus petit d'un facteur 0,35 à 0,7 que le diamètre maximal de la partie taraudante (31).

11. Vis selon la revendication 10, **caractérisée en ce que** le creux (33) est inférieur à 3 mm.

12. Vis selon une des revendications 1 à 11, **caractérisée en ce que** la partie taraudante (4,9) présente une extrémité arrondie mousse (5,10).
